# EUROPEAN PATENT SPECIFICATION

(11) **EP 4 234 494 B1**
(45) Date of publication and mention of the grant of the patent: **03.12.2025**
(21) Application number: 21882593.3
(22) Date of filing: 06.10.2021
(51) Int. Cl.: C01C 1/08, B01D 53/94, F01N 3/08, F01N 3/10, F01N 3/28, B01J 21/06

(54) **DEVICE AND METHOD FOR SUPPRESSING GENERATION OF HIGH MELTING POINT PIPE CLOGGING SUBSTANCE**
VORRICHTUNG UND VERFAHREN ZUR UNTERDRÜCKUNG DER ERZEUGUNG EINER VERSTOPFUNGSSUBSTANZ FÜR ROHRE MIT HOHEM SCHMELZPUNKT
DISPOSITIF ET MÉTHODE POUR SUPPRIMER LA GÉNÉRATION D'UNE SUBSTANCE DE BOUCHAGE DE TUYAU À POINT DE FUSION ÉLEVÉ

(30) Priority: 20.10.2020 JP 2020176139
(43) Date of publication of application: 30.08.2023
(73) Proprietor: MITSUI E&S Co., Ltd., Tokyo 104-8439 (JP)
(72) Inventor: INABA Toshiharu, Tamano-shi, Okayama 706-8651 (JP); HATTORI Nozomu, Tamano-shi, Okayama 706-8651 (JP)
(74) Representative: Lorenz Seidler Gossel Part. mbB
(86) International application number: PCT/JP2021/036976
(87) International publication number: WO 2022/085452

(56) References cited:
- EP-A1- 1 676 986
- EP-A1- 2 166 207
- JP-A- 2001 129 407
- JP-A- 2002 332 827
- JP-A- 2005 105 970
- JP-A- 2009 537 724
- JP-A- 2010 514 545
- JP-A- H11 510 872
- JP-A- H11 510 872
- US-A1- 2004 040 288
- US-A1- 2009 145 117
- US-A1- 2011 030 345

## Description

### TECHNICAL FIELD

The present invention relates to a device for suppressing formation (generation) of a high-melting-point pipe-clogging substance and a method for preventing pipe clogging due to a high-melting-point substance, and in particular, relates to a device for suppressing formation of a high-melting-point pipe-clogging substance and a method for preventing pipe clogging due to a high-melting-point substance, which can prevent pipe clogging due to scale in a pipe caused by a urea-derived high-melting-point substance formed by thermal decomposition of urea.

### BACKGROUND

Exhaust gas emitted from diesel engines contains pollutants such as hydrocarbon (HC), carbon monoxide (CO), nitrogen oxide (NOₓ), and particulate matter (PM).

Among these pollutants, NOₓ is difficult to be purified with oxidation catalysts or three-way catalysts used practically in gasoline-fueled cars, and a selective reduction type NOₓ catalyst, which is a denitration catalyst, has been studied as a promising catalyst that can purify NOₓ (Patent Document 1).

The denitration catalyst produces nitrogen gas (N₂) through the following reaction of NOₓ, such as NO and NO₂, with ammonia (reductant), thereby contributing to removal of NOₓ.

(1) 4NO + 4NH₃ + O₂ → 4N₂ + 6H₂O

(2) NO + NO₂ + 2NH₃ → 2N₂ + 3H₂O

(3) 6NO₂ + 8NH₃ → 7N₂ + 12H₂O

As a method of supplying ammonia as a reductant, a method of adding urea from a urea-solution tank into an exhaust system upstream of the denitration catalyst thereby producing ammonia to be used is known.

### PRIOR ART DOCUMENTS

### PATENT DOCUMENTS

Patent Document 1: JP-A-2009-197762
Patent Document 2: EP 1 676 986 A1
Patent Document 3: JP H11 510872 A

### SUMMARY OF THE INVENTION

### PROBLEM TO BE SOLVED BY THE INVENTION

Patent Document 2 discloses an exhaust emission purifying apparatus for an engine. Patent Document 3 discloses a catalytic converter for reducing hydrocarbon in the exhaust gases of a motor vehicle.

According to Patent Document 1, as a method of supplying ammonia as a reductant, the method of adding urea from a urea-solution tank into the exhaust system upstream of the denitration catalyst thereby producing ammonia to be used is known, but urea is hydrolyzed by heat from exhaust gas or by a hydrolysis catalyst to produce ammonia. However, it is pointed out that, through thermal decomposition of urea by heat of exhaust gas, the urea changes into high-melting-point substances such as cyanuric acid, isocyanic acid, and melamine, causing a problem that the decomposition efficiency decreases and the NOₓ reduction performance at a downstream location decreases, and also a problem of clogging of pipes and the like with high-melting-point substances.

However, Patent Document 1 only points out that all high-melting-point substances such as cyanuric acid, isocyanic acid, and melamine have a problem of pipe clogging, but does not clarify what substances contribute to the pipe clogging due to scale in a pipe.

It is also known that thermal decomposition of urea produces isocyanic acid and cyanic acid, produces cyanuric acid (six-membered ring), and also produces melamine (six-membered ring).

According to studies made by the inventor of the present invention, it was found, through qualitative analysis conducted by the X-ray diffraction method, that a component that clogs a urea-solution injection nozzle or a component that clogs an exhaust gas pipe when urea is sprayed into the exhaust gas pipe is cyanuric acid (six-membered ring).

In the thermal decomposition of urea, in a process in which cyanuric acid is formed, isocyanic acid and cyanic acid are produced by heating at 150°C to 300°C, a part of the isocyanic acid and the cyanic acid is slow in reaction speed, and is polymerized (trimerized) into cyanuric acid at about 150°C to about 300°C. In another reaction pathway, when urea is heated at 135°C (its melting point) or higher, ammonia is intermolecularly liberated to form isocyanic acid and cyanic acid, a part of which forms biuret (intermediate). Furthermore, when the temperature has been increased to 196°C, this intermediate is decomposed into cyanuric acid.

Among the substances formed during these thermal decomposition processes of urea, it is difficult to cause hydrolysis in six-membered rings such as melamine and cyanuric acid.

The inventor focused on isocyanic acid and cyanic acid that have not yet become multimeric, and found that when hydrolysis of isocyanic acid and cyanic acid is promoted before polymerization of isocyanic acid and cyanic acid to form cyanuric acid, the amount of cyanuric acid formed decreases. Thus, the present invention has been made.

In view of this, it is an object of the present invention to provide a device for suppressing formation of a high-melting-point pipe-clogging substance and a method for preventing pipe clogging due to a high-melting-point substance by promoting hydrolysis of isocyanic acid and cyanic acid and decreasing the amount of cyanuric acid formed.

Furthermore, other objects of the present invention will become apparent upon reading the following description.

### MEANS FOR SOLVING PROBLEM

The above objects are achieved by each of the following inventions.
1. A device for suppressing formation of a high-melting-point pipe-clogging substance, wherein
   a urea-solution supply pipe configured to supply pressurized air and a urea solution is disposed into a pipe through which exhaust gas flows,
   a urea-solution spray nozzle is connected near a tip of the urea-solution supply pipe,
   a mixing section configured to mix the exhaust gas flowing through the pipe and a sprayed urea solution sprayed from the urea-solution spray nozzle is provided,
   a metal sheet is circumferentially provided on all or part of an inner wall surface of the pipe in a belt-like manner around the mixing section, and
   on an inner surface of the metal sheet, a hydrolysis catalyst layer configured to promote hydrolysis of urea is formed, **wherein the hydrolysis catalyst is a TiO₂ catalyst.**
2. The device for suppressing formation of a high-melting-point pipe-clogging substance according to 1, wherein the metal sheet is an aluminum metal sheet or a stainless steel metal sheet.
3. A method for preventing pipe clogging due to a high-melting-point substance, wherein
   a urea-solution supply pipe configured to supply pressurized air and a urea solution is disposed into a pipe through which exhaust gas flows,
   a urea-solution spray nozzle is connected near a tip of the urea-solution supply pipe,
   a mixing section configured to mix the exhaust gas flowing through the pipe and a sprayed urea solution sprayed from the urea-solution spray nozzle is provided,
   on an inner surface of a metal sheet circumferentially provided on all or part of an inner wall surface of the pipe in a belt-like manner around the mixing section, a hydrolysis catalyst layer configured to promote hydrolysis of urea is formed, and
   the urea solution sprayed from the urea-solution spray nozzle is brought into contact with the hydrolysis catalyst layer to promote hydrolysis of isocyanic acid (HN=C=O) and cyanic acid (HOCN), thereby producing ammonia and also decreasing the amount of cyanuric acid formed, wherein the **hydrolysis catalyst is a TiO₂ catalyst.**
4. The method for preventing pipe clogging due to a high-melting-point substance according to 3, wherein the sprayed urea solution sprayed from the urea-solution spray nozzle is brought into contact with the hydrolysis catalyst layer to promote a hydrolysis reaction through which isocyanic acid and cyanic acid, which are byproducts other than ammonia produced by thermal decomposition of urea, and moisture in the atmosphere are hydrolyzed to be converted into ammonia and carbon dioxide, whereby isocyanic acid and cyanic acid for the isocyanic acid and the cyanic acid to be polymerized into cyanuric acid decrease, and consequently the amount of cyanuric acid formed from urea is decreased.

### EFFECT OF THE INVENTION

According to the present invention, it is possible to provide the device for suppressing formation of a high-melting-point pipe-clogging substance and the method for preventing pipe clogging due to a high melting-point substance by promoting hydrolysis of isocyanic acid and cyanic acid and decreasing the amount of cyanuric acid formed.

### BRIEF DESCRIPTION OF DRAWINGS

Fig. 1 is an explanatory diagram illustrating an example of a device for suppressing formation of a high-melting-point piping-clogging substance according to the present invention.

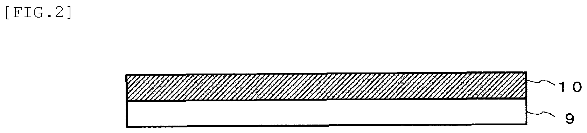

Fig. 2 is a schematic sectional view illustrating an example of a catalyst sheet according to the present invention.

### DESCRIPTION OF THE PREFERRED EMBODIMENTS

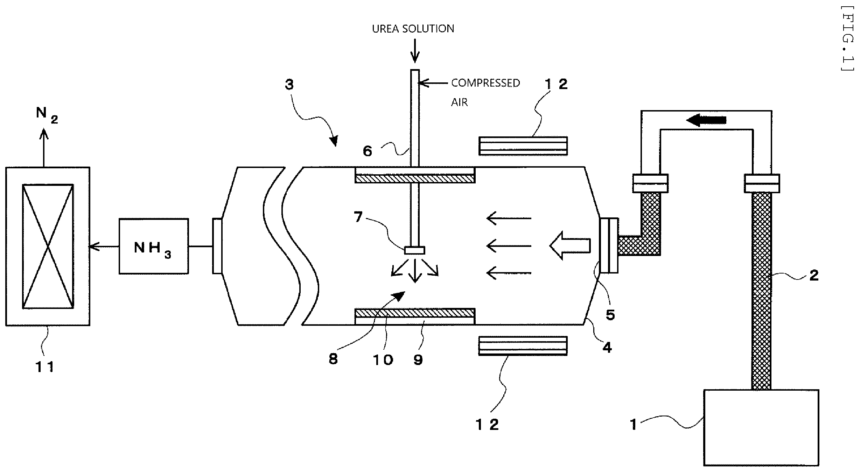

An embodiment of a device for suppressing formation of a high-melting-point piping-clogging substance according to the present invention will now be described with reference to Fig. 1.

Fig. 1 is an explanatory diagram illustrating an example of the device for suppressing formation of a high-melting-point pipe-clogging substance according to the present invention.

In Fig. 1, the numeral "1" denotes a diesel engine, and the numeral "2" denotes an exhaust gas pipe through which exhaust gas discharged from the diesel engine 1 is sent.

The numeral "3" denotes a hydrolysis device for a urea solution, and is also called a vaporizer. The hydrolysis device 3 is provided in a vaporization pipe 4. An exhaust-gas inlet 5 is provided at an inlet of the vaporization pipe 4, and exhaust gas is introduced into the vaporization pipe 4 through the inlet 5.

Into the vaporization pipe 4, a urea-solution supply pipe 6 configured to supply pressurized air (compressed air) and a urea solution is disposed, and a urea-solution spray nozzle 7 is provided near a tip of the urea-solution supply pipe 6. The urea-solution spray nozzle 7 is configured to be able to spray the urea solution into the vaporization pipe 4.

The numeral "8" denotes a mixing section configured to mix the exhaust gas flowing through the vaporization pipe 4 and the sprayed urea solution sprayed from the urea-solution spray nozzle.

A metal sheet 9 is circumferentially provided on all or part of the inner wall surface of the vaporization pipe 4 in a belt-like manner around the mixing section 8. On the inner surface of the metal sheet 9, a hydrolysis catalyst layer 10 configured to promote hydrolysis of urea is formed. A laminated structure with the hydrolysis catalyst layer 10 formed on the metal sheet 9 is preferably formed in a sheet shape.

The metal sheet 9 is preferably an aluminum metal sheet or a stainless steel metal sheet, for example.

A catalyst material used for the hydrolysis catalyst layer 10is TiO₂. TiO₂ is from the viewpoint of availability and a good balance between safety and catalytic performance.

When the exhaust gas and the sprayed urea solution are mixed in the mixing section 8, the following hydrolysis reaction occurs.

(NH₂)₂CO + H₂O → 2NH₃ + CO₂

The method of forming the hydrolysis catalyst layer 10 by providing the hydrolysis catalyst on the metal sheet 9 is not limited to a particular one as long as the hydrolysis catalyst can be immobilized on the metal sheet 9 to form the hydrolysis catalyst layer 10. The hydrolysis catalyst layer 10 can be formed by, for example, mixing a dispersion solution with titanium oxide as a catalyst to prepare a hydrolysis-catalyst coating solution, and applying this coating solution to the metal sheet 9 such as an aluminum metal sheet or a stainless steel metal sheet.

In the present embodiment, the hydrolysis catalyst may be provided directly on the inner wall of a metal exhaust gas pipe instead of on the metal sheet 9. As the method of providing the hydrolysis catalyst on the metal sheet 9 or on the inner wall of the metal exhaust gas pipe, various methods such as brushing, dipping, spraying, thermal spraying, and CVD as described above in addition to the application of the hydrolysis-catalyst coating solution may be used.

From the viewpoint of bringing the urea solution into contact with the catalyst, a position where the metal sheet 9 with the hydrolysis catalyst provided and the hydrolysis catalyst layer 10 formed thereon is provided, or a position of the inner wall of the pipe where the hydrolysis catalyst is provided is preferably near a position where the urea-solution spray nozzle 7 is disposed inside the pipe. For a turbocharged engine, the urea-solution spray nozzle 7 is disposed near a position of the exhaust gas pipe between the combustion chamber and the inlet of the turbocharger or a position of the exhaust gas pipe between the combustion chamber and the outlet of the turbocharger. Even in these cases, the hydrolysis catalyst is preferably disposed near the urea-solution spray nozzle 7.

As illustrated in Fig. 1, in the hydrolysis device 3, urea is hydrolyzed to produce NH₃ through the above hydrolysis reaction, and in a denitration device 11, the exhaust gas containing NOₓ and NH₃ is reduced and purified into N₂ through the following reduction reaction with a denitration catalyst.

4NO + 4NH₃ + O₂ → 4N₂ + 6H₂O

6NO₂ + 8NH₃ → 7N₂ + 12H₂O

The denitration catalyst is not limited to a particular one, and a catalyst is used that has a honeycomb structure in which an active component such as V, Cr, Mo, Mn, Fe, Ni, Cu, Ag, Au, Pd, Y, Ce, Nd, W, In, Ir, or Nb is supported on a support such as: TiO₂; binary composite oxide such as SiO₂-TiO₂, WO₃-TiO₂, SiO₂-TiO₂, or Al₂O₃-SiO₂; or ternary composite oxide such as WO₃-SiO₂-TiO₂, or Mo₃-SiO₂-TiO₂, and reduces NOₓ into nitrogen gas in the presence of NH₃ (reducing agent) for purification.

In the present embodiment, a temperature regulator 12 is preferably provided on the outer periphery of the vaporization pipe 4 so as to cover the vaporization pipe 4. The temperature regulator 12 is preferably a pipe heating mantle, for example.

The following describes a method for preventing pipe clogging due to a high-melting-point substance according to the present invention.

The method for preventing pipe clogging due to a high-melting-point substance will be described, which uses the device for suppressing formation of a high-melting-point pipe-clogging substance illustrated in Fig. 1.

Specifically, a heating system in which cyanuric acid is not formed by thermal decomposition of urea (at a temperature of 30°C to below 130°C, preferably below 100°C from the viewpoint of preventing crystal deposition), the urea solution sprayed from a urea-solution spray nozzle is brought into contact with the hydrolysis catalyst layer at a temperature of 135°C to 350°C, more preferably 150°C to 250°C to promote a hydrolysis reaction through which isocyanic acid (HN=C=O) and cyanic acid (HOCN), which are byproducts other than ammonia produced by thermal decomposition of urea, and moisture in the atmosphere are hydrolyzed to be converted into ammonia and carbon dioxide. Through the hydrolysis reaction thus promoted, isocyanic acid (HN=C=O) and cyanic acid (HOCN) to be polymerized into cyanuric acid decrease. Consequently, the amount of cyanuric acid formed from urea is decreased, whereby pipe clogging due to a high-melting-point substance can be prevented.

As a method of adjusting the heating temperature of urea to a temperature at which cyanuric acid is not formed, the temperature of the vaporization pipe 4 can be adjusted by the temperature regulator 12 provided on the outer periphery of the exhaust gas pipe as illustrated in Fig. 1. This allows the temperature of exhaust gas introduced into the vaporization pipe 4 to be adjusted. By providing the temperature regulator 12, the temperature of the exhaust gas can be adjusted when the need for adjustment arises. Consequently, the amount of cyanuric acid formed decreases, and pipe clogging due to a high-melting-point substance can be prevented.

In the present embodiment, it is also preferable to provide an air pipe (not illustrated) around the outer periphery of the vaporization pipe 4 (double-pipe structure) so as to allow compressed air to flow through this air pipe. The air volume may be adjusted in conjunction with an exhaust-gas temperature sensor. In this case, it is also preferable to provide the temperature regulator 12 on the outer periphery of the air pipe provided on the outer periphery of the vaporization pipe.

According to the present invention, in the thermal decomposition of urea by the heat of exhaust gas, isocyanic acid (HN=C=O) and cyanic acid (HOCN) to be polymerized into cyanuric acid decrease, and consequently the amount of cyanuric acid formed from the urea is decreased, whereby the amount of ammonia supply can be increased. This eliminates the possibility of decrease in denitration efficiency due to reductant hydrogen source supply loss caused by reductant hydrogen source retention in the pipe, or decrease in NOₓ reduction performance at a downstream location due to coating of the surface of the denitration catalyst or clogging of apertures of the honeycomb catalyst. Furthermore, by decreasing the amount of cyanuric acid formed, pipe clogging or blocking due to a high-melting-point substance in a location upstream of a catalytic reaction tube can be prevented, and troubles of decrease in engine power output due to increased back pressure in the exhaust gas pipe and of engine stalling in the worst case can be prevented.

### Examples

The following describes Examples of the present invention. However, the present invention is not limited to the Examples.

### Example 1

An experiment of suppressing formation of a high-melting-point pipe-clogging substance by using a NOₓ removal device illustrated in Fig. 1 with a hydrolysis device and a denitration device for exhaust gas emitted from a marine diesel engine was conducted.
1. Experimental conditions
   (1) Hydrolysis device
      Exhaust gas volume: SV 90,000/h
      Pipe for hydrolysis device: heating at 200°C (heating by pipe heating mantle at 250°C)
      Hydrolysis catalyst: A TiO₂ catalyst was applied in a sheet shape onto an aluminum metal sheet having a thickness of 0.1 mm to prepare a TiO₂ urea hydrolysis catalyst sheet having a total dry thickness of 0.105 mm to 0.200 mm (hereinafter referred to as TiO₂ catalyst AL sheet if necessary) .
   (2) Denitration device
      Denitration catalyst: A TiO₂ catalyst was applied to a metal honeycomb body by immersion coating to prepare a honeycomb catalyst as a denitration catalyst. This catalyst has a denitration function and a hydrolysis function.
   2. Experiment
      (1) An experiment was conducted as follows. From 300°C that is a usual gas temperature in a system achieved when the heating temperature of the pipe heating mantle is set to 450°C, the usual gas temperature in the system was intentionally lowered by 100°C, and a urea solution was sprayed to accelerate formation of cyanuric acid. Specifically, the heating temperature of the pipe heating mantle was set to 250°C, and the behavior of cyanuric acid formation at a gas temperature of 200°C in the system was examined.
      (2) Urea supply conditions
         a) The supply amount (g) of 32.5 wt%-urea solution of 4H is given in Table 1.
         b) The supply flow rate (g/min) of pure urea is given in Table 1.
      (3) Formation rate of high-melting-point substance (cyanuric acid)
         a) The amount (g) of a urea-derived high-melting-point substance (cyanuric acid) formed (after 240 min) was 6.12 g (see Table 1).
         b) The amount of the urea-derived high-melting-point substance (cyanuric acid) formed per unit time (g/min) was 0.0255 g/min (see Table 1).
      (4) The conversion ratio (%) of the supplied urea into the high-melting-point substance (cyanuric acid) was 3.9% (w/w) (see Table 1).

### Comparative Example 1

An experiment was conducted in the same manner as in Example 1, except that only the aluminum sheet was used without providing a catalyst on the aluminum sheet in Example 1.

The results are given in Table 1.

**[Table 1]**

| | | Comparative Example 1 | Example 1 |
|---|---|---|---|
| | | Blank (Al sheet) | TiO₂ catalyst Al sheet |
| Urea supply conditions | Supply amount (g) of 32.5 wt%-urea solution of 4H | 480 | 480 |
| | Supply flow rate (g/min) of pure urea | 0.65 | 0.65 |
| Formation rate of high-melting-point substance | Amount (g) of urea-derived high-melting-point substance formed after 240 min | 10.50 | 6.12 |
| | Amount of urea-derived high-melting-point substance formed per unit time (g/min) | 0.0438 | 0.0255 |
| | Conversion ratio of supplied urea into high-melting-point substance (w/w) | 6.7% | 3.9% |

### (Evaluation)

From the experimental results in Table 1, As the effect of the catalyst in suppressing formation of the high-melting-point substance (cyanuric acid), it was found that the conversion ratio of the supplied urea into the high-melting-point substance (cyanuric acid) decreased from 6.7% to 3.9%, and thus the formation of the high-melting-point substance (cyanuric acid) decreased by 42%.

### Example 2

An experiment of suppressing formation of a high-melting-point pipe-clogging substance by using a NOₓ removal device illustrated in Fig. 1 with a hydrolysis device and a denitration device for exhaust gas emitted from a marine diesel engine was conducted.

### 1. Experimental conditions

### (1) Hydrolysis device

### Exhaust gas volume: SV 90,000/h

Pipe for hydrolysis device: heating at 200°C (heating by pipe heating mantle at 250°C)

Hydrolysis catalyst: A TiO₂ catalyst was applied in a sheet shape onto a stainless steel metal sheet having a thickness of 0.1 mm to prepare a TiO₂ urea hydrolysis catalyst sheet with a total dry thickness of 0.105 mm to 0.200 mm (hereinafter referred to as TiO₂ catalyst SUS sheet if necessary).

### (2) Denitration device

Denitration catalyst: A TiO₂ catalyst was applied to a metal honeycomb body by immersion coating to prepare a honeycomb catalyst as a denitration catalyst. This catalyst has a denitration function and a hydrolysis function.

### 2. Experiment

(1) An experiment was conducted as follows. At a usual gas temperature of 200°C in the system lowered by 100°C from 300°C that is a usual gas temperature in a system achieved when the heating temperature of the pipe heating mantle is set to 450°C, a urea solution was sprayed to accelerate formation of cyanuric acid. Specifically, the heating temperature of the pipe heating mantle was set to 250°C, and the behavior of cyanuric acid formation at a gas temperature of 200°C in the system was examined.
(2) Urea supply conditions
   a) The supply amount (g) of 32.5 wt%-urea solution of 4H is given in Table 2.
   b) The supply flow rate (g/min) of pure urea is given in Table 2.
(3) Formation rate of high-melting-point substance (cyanuric acid)
   a) The amount (g) of a urea-derived high-melting-point substance (cyanuric acid) formed (after 240 min) was 1.92 g (see Table 2).
   b) The amount of the urea-derived high-melting-point substance (cyanuric acid) formed per unit time (g/min) was 0.00800 g/min (see Table 2).
(4) The conversion ratio (%) of the supplied urea into the high-melting-point substance (cyanuric acid) was 1.23% (w/w) (see Table 2).

### Comparative Example 2

An experiment was conducted in the same manner as in Example 2, except that only the stainless steel sheet was used without providing a catalyst on the stainless steel sheet in Example 2.

The results are given in Table 2.

**[Table 2]**

| | | Comparative Example 2 | Example 2 |
|---|---|---|---|
| | | Blank (SUS sheet) | TiO₂ catalyst SUS sheet |
| Urea supply conditions | Supply amount (g) of 32.5 wt%-urea solution of 4H | 480 | 480 |
| | Supply flow rate (g/min) of pure urea | 0.65 | 0.65 |
| Formation rate of high-melting-point substance | Amount (g) of Urea-derived high-melting-point substance after 240 min | 3.39 | 1.92 |
| | Amount of urea-derived high-melting-point substance formed per unit time (g/min) | 0.0141 | 0.00800 |
| | Conversion ratio of supplied urea into high-melting-point substance (w/w) | 2.17% | 1.23% |

### (Evaluation)

From the experimental results in Table 2, the conversion ratio of the supplied urea into the high-melting-point substance (cyanuric acid) was 2.17% in Comparative Example 2.

As the effect of the TiO₂ catalyst coated on the SUS sheet in suppressing formation of the high-melting-point substance (cyanuric acid), it was found that the conversion ratio of the supplied urea into the high-melting-point substance (cyanuric acid) decreased from 2.17% to 1.23%, and thus the formation of the high-melting-point substance (cyanuric acid) decreased by 43%.

### Examples 3 to 5 (not falling within the scope of the present invention)

Examples 3 to 5 were also tested in the same manner as in Example 2, except that an Al₂O₃ catalyst, an aluminum silicate oxide (Al₂O₃-SiO₂) catalyst, and a silica (SiO₂) catalyst were used instead of the TiO₂ catalyst of Example 2. Table 3 gives the results of the effects of the SUS metal sheets coated with the respective four catalysts of Examples 2 to 5 in suppressing formation of the high-melting-point substance (cyanuric acid) with respect to the SUS metal sheet with no catalyst in Comparative Example 2.

**[Table 3]**

| _ | Catalyst sheet type | Suppression effect |
|---|---|---|
| Example 2 | TiO₂ catalyst-coated SUS sheet | +43% |
| Example 3 | Al₂O₃ catalyst-coated SUS sheet | +40% |
| Example 4 | Aluminum silicate oxide catalyst-coated SUS Sheet | +40% |
| Example 5 | Silica catalyst-coated SUS sheet | +10% |

### (Evaluation)

Among these porous metal oxide catalysts coated on the surface of the SUS metal sheet, it was found that the effects of the TiO₂-based catalyst, the Al₂O₃ catalyst, and the aluminum silicate oxide (Al₂O₃-SiO₂) catalyst in suppressing the formation of the urea-derived high-melting-point substance (cyanuric acid) were relatively high, and the effect of the TiO₂-based catalyst was highest.

### EXPLANATIONS OF LETTERS OR NUMERALS

- 1: diesel engine
- 2: exhaust gas pipe
- 3: hydrolysis device for urea solution (vaporizer)
- 4: vaporization pipe
- 5: exhaust gas inlet
- 6: urea-solution supply pipe
- 7: urea-solution spray nozzle
- 8: mixing section
- 9: metal sheet
- 10: hydrolysis catalyst layer
- 11: denitration device
- 12: temperature regulator

## Claims

1. A device for suppressing formation of a high-melting-point pipe-clogging substance, wherein
a urea-solution supply pipe (6) configured to supply pressurized air and a urea solution is disposed into a pipe through which exhaust gas flows,
a urea-solution spray nozzle (7) is connected near a tip of the urea-solution supply pipe (6),
a mixing section (8) configured to mix the exhaust gas flowing through the pipe and a sprayed urea solution sprayed from the urea-solution spray nozzle (7) is provided **characterized in that**
a metal sheet (9) is circumferentially provided on all or part of an inner wall surface of the pipe in a belt-like manner around the mixing section (8), and
on an inner surface of the metal sheet (9), a hydrolysis catalyst layer (10) configured to promote hydrolysis of urea is formed, wherein the hydrolysis catalyst is a TiO₂ catalyst..

2. The device for suppressing formation of a high-melting-point pipe-clogging substance according to claim 1, wherein the metal sheet (9) is an aluminum metal sheet or a stainless steel metal sheet.

3. A method for preventing pipe clogging due to a high-melting-point substance, wherein
a urea-solution supply pipe (6) configured to supply pressurized air and a urea solution is disposed into a pipe through which exhaust gas flows,
a urea-solution spray nozzle (7) is connected near a tip of the urea-solution supply pipe (6),
a mixing section (8) configured to mix the exhaust gas flowing through the pipe and a sprayed urea solution sprayed from the urea-solution spray nozzle is provided,
on an inner surface of a metal sheet (9) circumferentially provided on all or part of an inner wall surface of the pipe in a belt-like manner around the mixing section (8), a hydrolysis catalyst layer (10) configured to promote hydrolysis of urea is formed, and
the urea solution sprayed from the urea-solution spray nozzle is brought into contact with the hydrolysis catalyst layer (10) to promote hydrolysis of isocyanic acid (HN=C=O) and cyanic acid (HOCN), thereby producing ammonia and also decreasing the amount of cyanuric acid formed, wherein the hydrolysis catalyst is a TiO₂ catalyst..

4. The method for preventing pipe clogging due to a high-melting-point substance according to claim 3, wherein the sprayed urea solution sprayed from the urea-solution spray nozzle (7) is brought into contact with the hydrolysis catalyst layer (10) to promote a hydrolysis reaction through which isocyanic acid and cyanic acid, which are byproducts other than ammonia produced by thermal decomposition of urea, and moisture in the atmosphere are hydrolyzed to be converted into ammonia and carbon dioxide, whereby isocyanic acid and cyanic acid for the isocyanic acid and the cyanic acid to be polymerized into cyanuric acid decrease, and consequently the amount of cyanuric acid formed from urea is decreased.

## Patentansprüche

1. Vorrichtung zum Unterdrücken der Bildung einer Rohrverstopfungssubstanz mit hohem Schmelzpunkt, wobei
ein Zuführrohr (6) für Harnstofflösung, das dazu ausgebildet ist, Druckluft und eine Harnstofflösung zuzuführen, in einem Rohr angeordnet ist, durch das Abgas strömt,
eine Sprühdüse (7) für Harnstofflösung in der Nähe einer Spitze des Zuführrohres (6) für Harnstofflösung angeschlossen ist,
ein Mischabschnitt (8) vorgesehen ist, der dazu ausgebildet ist, das durch das Rohr strömende Abgas und eine gesprühte Harnstofflösung, die aus der Sprühdüse (7) für Harnstofflösung gesprüht wird, zu mischen, **dadurch gekennzeichnet, dass**
ein Metallblech (9) am Umfang der gesamten oder eines Teils einer Innenwandfläche des Rohres in der Art eines Gürtels um den Mischabschnitt (8) vorgesehen ist, und
auf einer Innenfläche des Metallblechs (9) eine Hydrolysekatalysatorschicht (10) vorgesehen ist, die dazu ausgebildet ist, die Hydrolyse von Harnstoff zu fördern, wobei der Hydrolysekatalysator ein TiO₂-Katalysator ist.

2. Vorrichtung zum Unterdrücken der Bildung einer Rohrverstopfungssubstanz mit hohem Schmelzpunkt nach Anspruch 1, wobei das Metallblech (9) ein Aluminiumblech oder ein Edelstahlblech ist.

3. Verfahren zum Verhindern einer Rohrverstopfung durch eine Substanz mit hohem Schmelzpunkt, wobei
ein Zuführrohr (6) für Harnstofflösung, das dazu ausgebildet ist, Druckluft und eine Harnstofflösung zuzuführen, in einem Rohr angeordnet ist, durch das Abgas strömt,
eine Sprühdüse (7) für Harnstofflösung in der Nähe einer Spitze des Zuführrohres (6) für Harnstofflösung angeschlossen ist,
ein Mischabschnitt (8) vorgesehen ist, der dazu ausgebildet ist, das durch das Rohr strömende Abgas und eine gesprühte Harnstofflösung, die aus der Sprühdüse für Harnstofflösung gesprüht wird, zu mischen,
auf einer Innenfläche eines Metallblechs (9), das am Umfang der gesamten oder eines Teils einer Innenwandfläche des Rohres in der Art eines Gürtels um den Mischabschnitt (8) vorgesehen ist, eine Hydrolysekatalysatorschicht (10) vorgesehen ist, die dazu ausgebildet ist, die Hydrolyse von Harnstoff zu fördern, und
die aus der Sprühdüse für Harnstofflösung gesprühte Harnstofflösung mit der Hydrolysekatalysatorschicht (10) in Kontakt gebracht wird, um die Hydrolyse von Isocyansäure (HN=C=O) und Cyansäure (HOCN) zu fördern, wodurch Ammoniak erzeugt wird und außerdem die Menge der gebildeten Cyanursäure herabgesetzt wird, wobei der Hydrolysekatalysator ein TiO₂-Katalysator ist.

4. Verfahren zum Verhindern einer Rohrverstopfung durch eine Substanz mit hohem Schmelzpunkt nach Anspruch 3, wobei die gesprühte Harnstofflösung, die aus der Sprühdüse (7) für Harnstofflösung gesprüht wird, mit der Hydrolysekatalysatorschicht (10) in Kontakt gebracht wird, um eine Hydrolysereaktion zu fördern, durch die Isocyansäure und Cyansäure, die andere Nebenprodukte sind als durch die thermische Spaltung von Harnstoff erzeugter Ammoniak, und Feuchtigkeit in der Atmosphäre hydrolysiert werden, um in Ammoniak und Kohlendioxid umgewandelt zu werden, wodurch Isocyansäure und Cyansäure, die zu Cyanursäure polymerisiert werden sollen, abgebaut werden und folglich die aus Harnstoff gebildete Menge an Cyanursäure herabgesetzt wird.

## Revendications

1. Dispositif pour supprimer la formation d'une substance de bouchage de tuyau à point de fusion élevé, dans lequel
un tuyau d'alimentation en solution d'urée (6) configuré pour fournir de l'air sous pression et une solution d'urée est disposée dans un tuyau à travers lequel s'écoule du gaz d'échappement,
une buse de pulvérisation de solution d'urée (7) est connectée à proximité d'une extrémité du tuyau d'alimentation en solution d'urée (6),
une section de mélange (8) configurée pour mélanger le gaz d'échappement circulant dans le tuyau et une solution d'urée pulvérisée par la buse de pulvérisation de solution d'urée (7) est prévue, **caractérisé en ce que**
une tôle (9) est prévue circonférentiellement sur tout ou partie de la surface de paroi intérieure du tuyau, en forme de ceinture autour de la section de mélange (8), et
sur une surface intérieure de la tôle (9), une couche de catalyseur d'hydrolyse (10) configurée pour promouvoir l'hydrolyse de l'urée est formée, le catalyseur d'hydrolyse étant un catalyseur TiO₂.

2. Dispositif pour supprimer la formation d'une substance de bouchage de tuyau à point de fusion élevé selon la revendication 1, dans lequel la tôle (9) est une tôle en aluminium ou une tôle en acier inoxydable.

3. Méthode de prévention le bouchage de tuyau par une substance à point de fusion élevé, dans laquelle
un tuyau d'alimentation en solution d'urée (6) configuré pour fournir de l'air sous pression et une solution d'urée est disposée dans un tuyau à travers lequel s'écoule du gaz d'échappement,
une buse de pulvérisation de solution d'urée (7) est connectée à proximité d'une extrémité du tuyau d'alimentation en solution d'urée (6),
une section de mélange (8) configurée pour mélanger le gaz d'échappement circulant dans le tuyau et une solution d'urée pulvérisée par la buse de pulvérisation de solution d'urée (7) est prévue,
sur une surface intérieure d'une tôle (9) prévue circonférentiellement sur tout ou partie d'une surface de paroi intérieure du tuyau en forme de ceinture autour de la section de mélange (8), une couche de catalyseur d'hydrolyse (10) configurée pour promouvoir l'hydrolyse de l'urée est formée, et
la solution d'urée pulvérisée par la buse de pulvérisation de la solution d'urée est mise en contact avec la couche de catalyseur d'hydrolyse (10) pour promouvoir l'hydrolyse de l'acide isocyanique (HN=C=O) et de l'acide cyanique (HOCN), produisant ainsi de l'ammoniac et diminuant également la quantité d'acide cyanurique formée, le catalyseur d'hydrolyse étant un catalyseur TiO₂

4. Méthode de prévention le bouchage de tuyau par une substance à point de fusion élevé selon la revendication 3, dans lequel la solution d'urée pulvérisée par la buse de pulvérisation de solution d'urée (7) est mise en contact avec la couche de catalyseur d'hydrolyse (10) pour promouvoir une réaction d'hydrolyse par laquelle l'acide isocyanique et l'acide cyanique, qui sont des sous-produits autres que l'ammoniac produit par la décomposition thermique de l'urée, et l'humidité de l'atmosphère sont hydrolysés pour être convertis en ammoniac et en dioxyde de carbone, ce qui entraîne une diminution de l'acide isocyanique et de l'acide cyanique pour l'acide isocyanique et l'acide cyanique à polymériser en acide cyanurique et, par conséquent, une diminution de la quantité d'acide cyanurique formée à partir de l'urée.
